# EUROPEAN PATENT APPLICATION

(11) **EP 2 832 513 A1**
(43) Date of publication of application: **04.02.2015**
(21) Application number: 12873013.2
(22) Date of filing: 28.03.2012
(51) Int. Cl.: B28B 3/26

(54) **METHOD FOR MANUFACTURING HONEYCOMB STRUCTURE, AND EXTRUSION DIE**

(71) Applicant: Ibiden Co., Ltd, Ogaki-shi, Gifu 503-8604 (JP)
(72) Inventor: SATO Masaya, Ibi-gun Gifu 501-0695 (JP); ISHIKAWA Shigeharu, Ibi-gun Gifu 501-0695 (JP); GOTO Hiroyoshi, Ibi-gun Gifu 501-0695 (JP)
(74) Representative: Hoffmann Eitle
(86) International application number: PCT/JP2012/058128
(87) International publication number: WO 2013/145151

(57) **Abstract**

The method of producing a honeycomb structured body according to the present invention includes the steps of: producing at least one honeycomb molded body that comprises a plurality of cells, the cells being separated by cell walls and arranged in parallel with one another in a longitudinal direction, and an outer peripheral wall provided around the cells, by extrusion molding a ceramic raw material through a die for extrusion molding; producing at least one honeycomb fired body by firing the at least one honeycomb molded body; and producing a ceramic block of the at least one honeycomb fired body, the die comprising a die body having a raw material inlet side face and a molded body extrusion side face, the raw material inlet side face including raw material supply holes for supplying the ceramic raw material, the molded body extrusion side face including molding grooves for molding the ceramic raw material into the shape of the honeycomb molded body, the raw material supply holes and the molding grooves communicating with one another through connecting parts formed between the raw material supply holes and the molding grooves, the connecting parts each including, in a cross section parallel to the direction of extruding the ceramic raw material, a curved part provided at a position where the connecting part connects to the corresponding molding groove, and a straight part connected to the curved part and extending toward the corresponding raw material supply hole, the die including a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

## Description

### TECHNICAL FIELD

The present invention relates to a method of producing a honeycomb structured body, and a die for extrusion molding.

### BACKGROUND ART

Exhaust gases discharged from internal combustion engines of vehicles (e.g., buses, trucks) and construction machines contain particulate matter, such as soot. Particulate matter has been a problem as it is harmful to the environment and human body.

Thus, various particulate filters which include honeycomb structured bodies formed of porous ceramic are proposed. Those filters purify exhaust gases by capturing particulate matter in exhaust gases.

In conventional production of honeycomb structured bodies, a ceramic raw material is extrusion molded through a die for extrusion molding to produce a honeycomb molded body including a large number of cells which are separated by cell walls and are arranged in parallel with one another in a longitudinal direction.

One of known dies for extrusion molding used to produce honeycomb molded bodies includes raw material supply holes for supplying a ceramic raw material and molding grooves for molding the ceramic raw material into a honeycomb molded body, the molding grooves communicating with the raw material supply holes.

For example, Patent Literature 1 discloses a ceramic honeycomb extrusion die (die for extrusion molding) in which the surface of the paths for ceramic clay (ceramic raw material) has been worn down by supplying ceramic clay to clay supply holes (raw material supply holes) and molding grooves.

Patent Literature 2 discloses a cap for forming a honeycomb structured body (die for extrusion molding) having a convex curve at each position where a clay inlet hole (raw material supply hole) and a clay extruding slit (molding groove) communicate with one another.

### CITATION LIST

### Patent Literature

Patent Literature 1: JP H06-45130 B
Patent Literature 2: JP 2003-251619 A

### SUMMARY OF INVENTION

### Technical Problem

A die for extrusion molding for producing honeycomb molded bodies is desired to have a structure that allows smooth flow of a fluid (i.e. ceramic raw material) from the viewpoint of the moldability of honeycomb molded bodies.

The ceramic honeycomb extrusion die described in Patent Literature 1 equalizes the flow resistances of ceramic clay by causing the surface of the paths for the clay to wear down. The cap for forming a honeycomb structured body of Patent Literature 2 achieves smooth transfer of the clay from the clay inlet holes to the clay extrusion slits by providing a convex curve to each position where a clay inlet hole and a clay extrusion slit communicate with one another.

A die for extrusion molding is desired not to decrease the moldability even when the molding speed is increased from the viewpoint of the productivity of a honeycomb molded body.

Also, a method of producing a honeycomb structured body with a die for extrusion molding is desired to achieve higher moldability and higher productivity of a honeycomb structured body.

The present invention has been made to solve the above problems, and an object of the present invention is to provide a method of producing a honeycomb structured body which gives excellent moldability and excellent productivity of a honeycomb molded body. Another object of the present invention is to provide a die for extrusion molding which is used in the method of producing a honeycomb structured body.

### Solution to Problem

The method of producing a honeycomb structured body according to claim 1 is a method of producing a honeycomb structured body, including the steps of:
producing at least one honeycomb molded body that includes a plurality of cells, the cells being separated by cell walls and arranged in parallel with one another in a longitudinal direction, and an outer peripheral wall provided around the cells, by extrusion molding a ceramic raw material through a die for extrusion molding;
producing at least one honeycomb fired body by firing the at least one honeycomb molded body; and
producing a ceramic block of the at least one honeycomb fired body,
the die comprising a die body having a raw material inlet side face and a molded body extrusion side face,
the raw material inlet side face including raw material supply holes for supplying the ceramic raw material,
the molded body extrusion side face including molding grooves for molding the ceramic raw material into the shape of the honeycomb molded body,
the raw material supply holes and the molding grooves communicating with one another through connecting parts formed between the raw material supply holes and the molding grooves,
the connecting parts each including, in a cross section parallel to the direction of extruding the ceramic raw material, a curved part provided at a position where the connecting part connects to the corresponding molding groove, and a straight part connected to the curved part and extending toward the corresponding raw material supply hole,
the die including a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

The method of producing a honeycomb structured body according to claim 1 enables production of a honeycomb molded body by extrusion molding a ceramic raw material with a die for extrusion molding which has the above structure.

The die used in the method of producing a honeycomb structured body according to claim 1 includes curved parts each provided at a position where a connecting part and a molding groove connect to one another in a cross section parallel to the direction of extruding the ceramic raw material. The curved parts allow smooth flow of the ceramic raw material from the raw material supply holes to the molding grooves, similarly to the conventional dies for extrusion molding described in Patent Literature 1 and Patent Literature 2.

Also, the die for extrusion molding used in the method of claim 1 includes a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material. This structure allows smooth flow of the ceramic raw material from the raw material supply holes to the molding grooves.

The length a of each connecting part in the direction parallel to the direction of extruding the ceramic raw material corresponds to the distance from the raw material supply hole to the molding groove in the direction parallel to the direction of extruding the ceramic raw material. Hereinafter, the "length a of each connecting part in the direction parallel to the direction of extruding the ceramic raw material" is also referred to simply as "the length a of the connecting part".

The length b represented by the formula (x-y)/2 corresponds to the distance from a raw material supply hole to the corresponding molding groove in the direction perpendicular to the direction of extruding the ceramic raw material. Hereinafter, the length b is also referred to as the "distance b between the raw material supply hole and the molding groove".

When the inequality a/b < 2.0 holds, the length a of the connecting part is relatively short, or the distance b between the raw material supply hole and the molding groove is relatively long. If the length a of the connecting part is relatively short, the die does not allow smooth flow of the ceramic raw material from the raw material supply holes to the molding grooves, which is likely to cause clogging of the die with the ceramic raw material. In this case, an increase in the molding speed tends to cause cracking or deformation of the honeycomb molded body. In contrast, if the distance b between the raw material supply hole and the molding groove is relatively long, the width of each raw material supply hole is small in the case of producing the same sized honeycomb molded bodies. As a result, the resistance of the raw material supply holes is high, which leads to lower moldability and lower productivity of the honeycomb molded body.

As described above, the method of producing a honeycomb structured body according to claim 1 utilizes a die for extrusion molding which has the above structure. Hence, even if the molding speed is high, the honeycomb molded body can be prevented from being cracked or deformed because of clogging of the parts such as the molding grooves with the ceramic raw material. As a result, both the moldability and the productivity of the honeycomb molded body can be higher.

In the method of producing a honeycomb structured body according to claim 2, the part that satisfies the inequality 2.0 ≤ a/b in the die is at least 50% of the die body.

In the method of the present invention, at least 50% of the die body in the die for extrusion molding, but not the entire die body, may satisfy the inequality 2.0 ≤ a/b. If, however, a part that satisfies the inequality 2.0 ≤ a/b is less than 50% of the die body, the region allowing smooth flow of the ceramic raw material from the raw material supply holes to the molding grooves is small, and thus the effect of increasing the moldability and the productivity of the honeycomb molded body is insufficient.

In the method of producing a honeycomb structured body according to claim 3, the part that satisfies the inequality 2.0 ≤ a/b in the die includes 1/2 of a region ranging from the center of a cross section of the die body to the outer periphery of the cross section, the cross section perpendicular to the direction of extruding a ceramic raw material.

That is, the method of producing a honeycomb structured body according to claim 3 allows smoother flow of the ceramic raw material from the raw material supply holes to the molding grooves in the center portion of the die body than in the outer peripheral portion. The outer peripheral portion of the die body mainly forms the outer peripheral wall of the honeycomb molded body. The outer peripheral wall of a honeycomb molded body is typically thicker than the cell walls. Therefore, in the outer peripheral portion of the die body, the ceramic raw material is likely to smoothly flow even if the inequality 2.0 ≤ a/b is not satisfied. Accordingly, the method of claim 3 can increase the moldability and the productivity of the honeycomb molded body even if the entire die body of the die for extrusion molding does not satisfy the inequality 2.0 ≤ a/b.

In the method of producing a honeycomb structured body according to claim 4, the part that satisfies the inequality 2.0 ≤ a/b in the die satisfies the inequality 2.0 ≤ a/b ≤ 4.0.

If the inequality 2.0 ≤ a/b ≤ 4.0 holds, the moldability and the productivity of the honeycomb molded body can be further increased.

When the inequality a/b > 4.0 holds, the length a of the connecting part is relatively long, or the distance b between the raw material supply hole and the molding groove is relatively short. If the distance b between the raw material supply hole and the molding groove is relatively short, the width x of the raw material supply hole is close to the width y of the molding groove (i.e. the width x of the raw material supply hole is small). Hence, the resistance of the raw material supply hole is high, which leads to lower moldability and lower productivity of the honeycomb molded body. As a result, the die for extrusion molding tends to break, and thus has a shorter life. In contrast, if the length a of the connecting part is relatively long, the resistance against the ceramic raw material is high, which leads to lower moldability and lower productivity of the honeycomb molded body.

In the method of producing a honeycomb structured body according to claim 5, the width of each molding groove in the die corresponding to the thickness of a cell wall of the honeycomb molded body is 0.1 to 0.2 mm.

Also in the method of producing a honeycomb structured body according to claim 6, the width of each molding groove in the die corresponding to the thickness of the outer peripheral wall of the honeycomb molded body is 0.2 to 0.5 mm.

If the width of each molding groove corresponding to the thickness of each cell wall of the honeycomb molded body is 0.1 to 0.2 mm and the width of each molding groove corresponding to the thickness of the outer peripheral wall of the honeycomb molded body is 0.2 to 0.5 mm, the molding grooves having a small width typically tend to be clogged with the ceramic raw material. However, the ceramic raw material tends to smoothly flow from the raw material supply holes to the molding grooves if the die for extrusion molding includes curved parts and a part that satisfies the inequality 2.0 ≤ a/b. Thus, the honeycomb molded body can be prevented from being cracked or deformed.

In the method of producing a honeycomb structured body according to claim 7, the curved parts of the die are formed by flow polishing.

Flow polishing can facilitate the production of a die for extrusion molding which includes curved parts and a part that satisfies the inequality 2.0 ≤ a/b.

In the method of producing a honeycomb structured body according to claim 8, the honeycomb molded body is formed from a material mainly formed from silicon carbide.

Typically, in the case of using a ceramic raw material mainly containing rigid silicon carbide, the die for extrusion molding tends to be worn down, which gives a large variety of sizes to the molded bodies. However, if the die for extrusion molding includes curved parts and a part that satisfies the inequality 2.0 ≤ a/b, the ceramic raw material tends to flow from the raw material supply holes to the molding grooves, and thus the honeycomb molded body can be prevented from being cracked or deformed.

Therefore, the method of claim 8 enables suitable production of a silicon carbide-based honeycomb structured body.

In the method of producing a honeycomb structured body according to claim 9, the step of producing a ceramic block includes binding a plurality of the honeycomb fired bodies together with an adhesive paste therebetween.

In this way, the method of claim 9 enables suitable production of what is called an aggregated honeycomb structured body.

The die for extrusion molding according to claim 10 is
a die for extrusion molding, used for producing at least one honeycomb molded body that includes a plurality of cells, the cells being separated by cell walls and arranged in parallel with one another in a longitudinal direction, and an outer peripheral wall provided around the cells, by extrusion molding a ceramic raw material through a die for extrusion molding,
the die including a die body having a raw material inlet side face and a molded body extrusion side face,
the raw material inlet side face including raw material supply holes for supplying the ceramic raw material,
the molded body extrusion side face including molding grooves for molding the ceramic raw material into the shape of the honeycomb molded body,
the raw material supply holes and the molding grooves communicating with one another through connecting parts formed between the raw material supply holes and the molding grooves,
the connecting parts each including, in a cross section parallel to the direction of extruding the ceramic raw material, a curved part provided at a position where the connecting part connects to the corresponding molding groove, and a straight part connected to the curved part and extending toward the corresponding raw material supply hole,
the die including a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

In the die for extrusion molding according to claim 11, the part that satisfies the inequality 2.0 ≤ a/b includes at least 50% of the region of the die body.

In the die for extrusion molding according to claim 12, the part that satisfies the inequality 2.0 ≤ a/b includes 1/2 of a region ranging from the center of a cross section of the die body to the outer periphery of the cross section, the cross section perpendicular to the direction of extruding a ceramic raw material.

In the die for extrusion molding according to claim 13, the part that satisfies the inequality 2.0 ≤ a/b satisfies the inequality 2.0 ≤ a/b ≤ 4.0.

In the die for extrusion molding according to claim 14, the width of each molding groove corresponding to the thickness of a cell wall of the honeycomb molded body is 0.1 to 0.2 mm.

In the die for extrusion molding according to claim 15, the width of each molding groove corresponding to the thickness of the outer peripheral wall of the honeycomb molded body is 0.2 to 0.5 mm.

In the die for extrusion molding according to claim 16, the curved parts are formed by flow polishing.

In the die for extrusion molding according to claim 17, the honeycomb molded body is formed from a material mainly containing silicon carbide.

If the die for extrusion molding according to any one of claims 10 to 17 is used, the honeycomb molded body can be prevented from being cracked or deformed because of clogging of the parts such as the molding grooves with the ceramic raw material even if the molding speed is high. Accordingly, in the case of using the die for extrusion molding according to any one of claims 10 to 17 in production of a honeycomb structured body, both the moldability and the productivity of the honeycomb molded body can be increased.

### BRIEF DESCRIPTION OF DRAWINGS

Fig. 1 is a cross-sectional view schematically illustrating an example of a die for extrusion molding according to the first embodiment of the present invention.
Fig. 2(a) is a front enlarged view of a die body constituting the die for extrusion molding illustrated in Fig. 1; and Fig. 2(b) is a rear view of the die body.
Fig. 3 is a partial enlarged view of the die body constituting the die for extrusion molding illustrated in Fig. 1.
Fig. 4 is a cross-sectional view of the die body constituting the die for extrusion molding illustrated in Fig. 1 in the direction perpendicular to the direction of extruding the ceramic raw material.
Fig. 5 is a perspective view schematically illustrating production of a honeycomb molded body with an extruder including the die for extrusion molding according to the first embodiment of the present invention.
Fig. 6(a) is a perspective view schematically illustrating an example of the honeycomb molded body according to the first embodiment of the present invention; and Fig. 6(b) is a C-C line cross-sectional view of the honeycomb molded body illustrated in Fig. 6(a).
Fig. 7(a) is a perspective view schematically illustrating an example of the honeycomb fired body according to the first embodiment of the present invention; and Fig. 7(b) is a D-D line cross-sectional view of the honeycomb fired body illustrated in Fig. 7(a).
Fig. 8 is a perspective view schematically illustrating an example of the honeycomb structured body according to the first embodiment of the present invention.
Fig. 9 is a graph showing the relation between the a/b ratio and the molding speed in Examples 1 to 3 and Comparative Examples 1 and 2.

### DESCRIPTION OF EMBODIMENTS

In the case of producing a honeycomb molded body with the conventional die for extrusion molding described in Patent Literature 1 or Patent Literature 2, an increase in the molding speed has been found to cause clogging of the molding grooves or the like with the ceramic raw material, leading to cracking or deformation of the resulting honeycomb molded body.

Thus, the method of producing a honeycomb structured body with the die for extrusion molding described in Patent Literature 1 or Patent Literature 2 is considered to have a disadvantage of not being able to achieve both the moldability and the productivity.

The present inventors have made various studies on methods not causing cracking or deformation in the resulting honeycomb structured bodies. As result, the present inventors have focused on the difference between the widths of the raw material supply holes and the molding grooves of a die for extrusion molding in a cross section parallel to the direction of extruding the ceramic raw material, as a method for overcoming the above disadvantage which cannot be overcome by the convention die for extrusion molding described in Patent Literature 1 or Patent Literature 2.

Consequently, the present inventors have found that the ceramic raw material can more smoothly flow from the raw material supply holes to the molding grooves by setting, to a predetermined value, the ratio between the distance from the raw material supply holes to the molding grooves in the direction perpendicular to the direction of extruding the ceramic raw material and the distance parallel to the direction of extruding the ceramic raw material. Thereby, the present invention has been completed.

Hereafter, the present invention is described in detail based on embodiments. The present invention, however, is not limited to the following embodiments, and appropriate changes may be made without departing from the scope of the present invention.

### (First embodiment)

Hereinafter, the first embodiment, which is one embodiment of the method of producing a honeycomb structured body and the die for extrusion molding according to the present invention, is described with reference to the drawings.

The method of producing a honeycomb structured body according to the first embodiment of the present invention is
a method of producing a honeycomb structured body, including the steps of:
producing at least one honeycomb molded body that includes a plurality of cells, the cells being separated by cell walls and arranged in parallel with one another in a longitudinal direction, and an outer peripheral wall provided around the cells, by extrusion molding a ceramic raw material through a die for extrusion molding;
producing at least one honeycomb fired body by firing the at least one honeycomb molded body; and
producing a ceramic block of the at least one honeycomb fired body,
the die comprising a die body having a raw material inlet side face and a molded body extrusion side face,
the raw material inlet side face including raw material supply holes for supplying the ceramic raw material,
the molded body extrusion side face including molding grooves for molding the ceramic raw material into the shape of the honeycomb molded body,
the raw material supply holes and the molding grooves communicating with one another through connecting parts formed between the raw material supply holes and the molding grooves,
the connecting parts each including, in a cross section parallel to the direction of extruding the ceramic raw material, a curved part provided at a position where the connecting part connects to the corresponding molding groove, and a straight part connected to the curved part and extending toward the corresponding raw material supply hole,
the die including a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

First, the die for extrusion molding used in the method of producing a honeycomb structured body according to the first embodiment of the present invention is described. This die is a die for extrusion molding according to the first embodiment of the present invention.

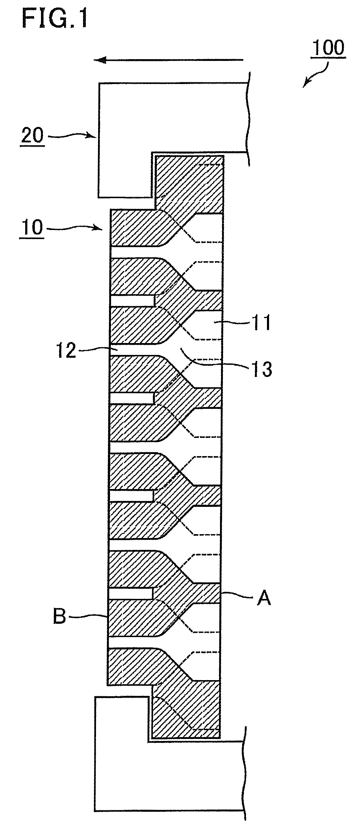

Fig. 1 is a cross-sectional view schematically illustrating an example of a die for extrusion molding according to the first embodiment of the present invention.

Fig. 1 is a cross-sectional view of a die for extrusion molding in the direction parallel to the direction of extruding the ceramic raw material. In Fig. 1, the direction of extruding the ceramic raw material is indicated by an arrow.

A die 100 for extrusion molding illustrated in Fig. 1 includes a die body 10 that has a raw material inlet side face A and a molded body extrusion side face B; and an outer frame 20 for fixing the die body 10. The outer frame may be provided according to need.

As illustrated in Fig. 1, the raw material inlet side face A of the die body 10 includes raw material supply holes 11 for supplying the ceramic raw material.

The molded body extrusion side face B of the die body 10 on the opposite side to the raw material inlet side face A includes molding grooves 12 for molding the ceramic raw material, passed through the raw material supply holes 11, into the shape of a honeycomb molded body.

Between the raw material supply holes 11 and the molding grooves 12, connecting parts 13 are formed. The raw material supply holes 11 and the molding grooves 12 communicate with one another through the connecting parts 13 in the die body 10.

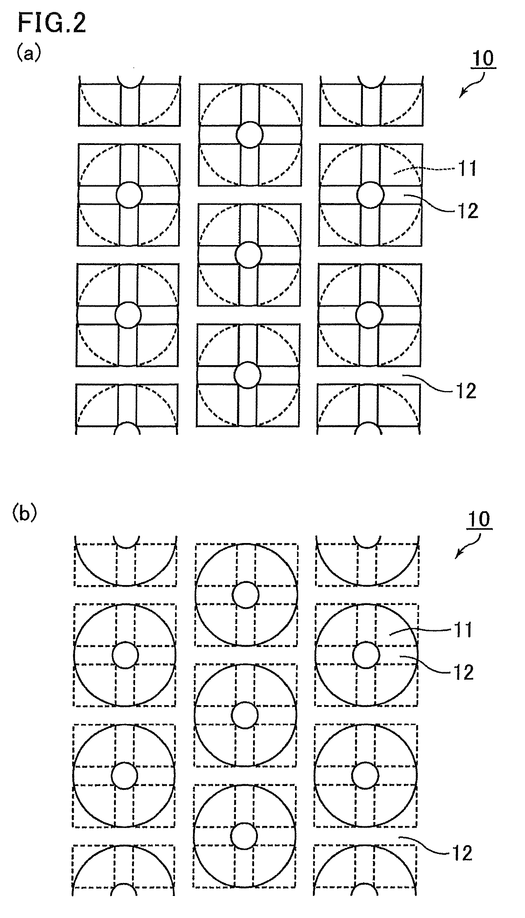

Fig. 2(a) is a front enlarged view of a die body constituting the die for extrusion molding illustrated in Fig. 1; and Fig. 2(b) is a rear view of the die body.

As illustrated in Fig. 2(a) and Fig. 2(b), the molding grooves each have a slit width that corresponds to the thickness of a cell wall or an outer peripheral wall of the honeycomb molded body (honeycomb structural body). For example, the molding grooves 12 are formed in the lattice shape. The raw material supply holes 11 are usually formed at positions corresponding to positions where the molding grooves 12 formed in the lattice shape, for example, intersect each other.

In a cross section parallel to the direction of extruding the ceramic raw material in the die of the first embodiment of the present invention, the connecting parts each include a curved part provided at a position where the connecting part connects to the corresponding molding groove, and a straight part connected to the curved part and extending toward the corresponding raw material supply hole.

The die for extrusion molding according to the first embodiment of the present invention includes a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

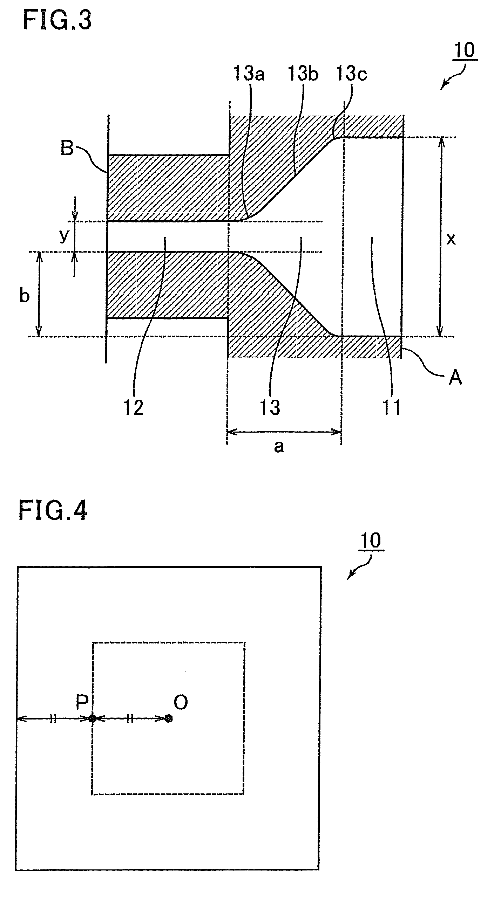

The above two features are described in view of Fig. 3.

Fig. 3 is a partial enlarged view of the die body constituting the die for extrusion molding illustrated in Fig. 1.

The connecting part 13 of the die body 10 illustrated in Fig. 3 includes a curved part 13a provided at a position where the connecting part 13 connects to the molding groove 12, and a straight part 13b connected to the curved part 13a and extending toward the raw material supply hole 11.

In Fig. 3, the connecting part 13 includes a curved part 13c provided at a position where the connecting part 13 connects to the raw material supply hole 11, but may not include the curved part 13c. For example, the connecting part 13 may consist of the curved part 13a and the straight part 13b.

As illustrated in Fig. 3, in the direction parallel to the direction of extruding the ceramic raw material, the length a of the connecting part 13 is the length between the intersection of the inner face of the molding groove 12 with the curved part 13a of the connecting part 13 and the intersection of the inner face of the raw material supply hole 11 with the curved part 13c of the connecting part 13 (i.e. the length indicated by the arrow a in Fig. 3). Here, if the connecting part 13 does not include the curved part 13c, the length a of the connecting part 13 is the length between the intersection of the inner face of the molding groove 12 with the curved part 13a of the connecting part 13 and the intersection of the inner face of the raw material supply hole 11 with the straight part 13b of the connecting part 13. If the connecting part 13 has different lengths at the upper and lower sides, the shorter length is regarded as the length a of the connecting part 13.

As illustrated in Fig. 3, the raw material supply hole 11 is the part from the raw material inlet side face A of the die body 10 to the curved part 13c of the connecting part 13 (the straight part 13b if the curved part 13c is not provided). The molding groove 12 is the part from the molded body extrusion side face B of the die body 10 to the curved part 13a of the connecting part 13.

The die body 10 illustrated in Fig. 3 satisfies the inequality 2.0 ≤ a/b wherein a represents the length of the connecting part 13 in the direction parallel to the direction of extruding the ceramic raw material and b = (x-y)/2, wherein x represents the width of the raw material supply hole 11 at a position where the hole 11 connects to the connecting part 13 in a direction perpendicular to the direction of extruding the ceramic raw material, and y represents the width of the molding groove 12 in a direction perpendicular to the direction of extruding the ceramic raw material.

As illustrated in Fig. 3, the width of the raw material supply hole 11 in the direction perpendicular to the direction of extruding the ceramic raw material is the width of the raw material supply hole 11 along the raw material inlet side face A in the die body 10 (i.e. the length indicated by the arrow x in Fig. 3). Similarly, the width of the molding groove 12 in the direction perpendicular to the direction of extruding the ceramic raw material is the width of the molding groove 12 along the molded body extrusion side face B of the die body 10 (i.e. the length indicated by the arrow y in Fig. 3).

As described above, the length a of each connecting part 13 in the direction parallel to the direction of extruding the ceramic raw material corresponds to the distance from the raw material supply hole 11 to the corresponding molding groove 12 in the direction parallel to the direction of extruding the ceramic raw material.

If the raw material supply hole 11 includes the molding groove 12 at its center as in the case of the die body 10 illustrated in Fig. 3, the length b represented by (x-y)/2 corresponds to the distance from the raw material supply hole 11 to the molding groove 12 in the direction perpendicular to the direction of extruding the ceramic material.

The die for extrusion molding according to the first embodiment of the present invention, satisfying the inequality 2.0 ≤ a/b, allows smooth flow of the ceramic raw material from the raw material supply holes to the molding grooves.

When the inequality a/b < 2.0 holds, the length a of the connecting part is relatively short, or the distance b between the raw material supply hole and the molding groove is relatively long. If the length a of the connecting part is relatively short, the die does not allow smooth flow of the ceramic raw material from the raw material supply holes to the molding grooves, which is likely to cause clogging of the die with the ceramic raw material. In this case, an increase in the molding speed tends to cause cracking or deformation of the honeycomb molded body. In contrast, if the distance b between the raw material supply hole and the molding groove is relatively long, the width of each raw material supply hole is small in the case of producing the same sized honeycomb molded bodies. As a result, the resistance of the raw material supply holes is high, which leads to lower moldability and lower productivity of the honeycomb molded body.

The part that satisfies the inequality 2.0 ≤ a/b preferably satisfies the inequality 2.0 ≤ a/b ≤ 4.0, more preferably the inequality 2.5 ≤ a/b ≤ 4.0, and still more preferably the inequality 3.0 ≤ a/b ≤ 4.0.

When the inequality a/b > 4.0 holds, the length a of the connecting part is relatively long, or the distance b between the raw material supply hole and the molding groove is relatively short. If the distance b between the raw material supply hole and the molding groove is relatively short, the width x of the raw material supply hole is close to the width y of the molding groove (i.e. the width x of the raw material supply holes is small). Hence, the resistance of the raw material supply hole is high, which leads to lower moldability and lower productivity of the honeycomb molded body. As a result, the die for extrusion molding tends to break, and thus has a shorter life. In contrast, if the length a of the connecting part is relatively long, the resistance against the ceramic raw material is high, which leads to lower moldability and lower productivity of the honeycomb molded body.

In the die for extrusion molding according to the first embodiment of the present invention, part of the die body, but not the entire die body, may satisfy the inequality 2.0 ≤ a/b.

In particular, the part that satisfies the inequality 2.0 ≤ a/b is preferably at least 50%, more preferably at least 70%, of the die body. Also, the part that satisfies the inequality 2.0 ≤ a/b is more preferably 50% to 100%, particularly preferably 70% to 100%, of the die body.

If the part that satisfies the inequality 2.0 ≤ a/b is less than 50% of the die body, the region allowing smooth flow of the ceramic raw material from the raw material supply holes to the molding grooves is small, and thus the effect of improving the moldability and the productivity of the honeycomb molded body is insufficient.

In the die for extrusion molding according to the first embodiment of the present invention, the part that satisfies the inequality 2.0 ≤ a/b in the die includes 1/2 of a region ranging from the center of a cross section of the die body to the outer periphery of the cross section, the cross section perpendicular to the direction of extruding a ceramic raw material. In this case, even if the entire die body of the die does not satisfy the inequality 2.0 ≤a/b, both the moldability and the productivity of the honeycomb molded body can be improved.

Hereinafter, "1/2 of a region ranging from the center of a cross section of the die body to the outer periphery of the cross section, the cross section perpendicular to the direction of extruding a ceramic raw material" is described.

Fig. 4 is a cross-sectional view in the direction perpendicular to the direction of extruding the ceramic raw material in the die body constituting the die for extrusion molding illustrated in Fig. 1.

As illustrated in Fig. 4, the expression "1/2 of a region ranging from the center of a cross section of the die body to the outer periphery of the cross section, the cross section perpendicular to the direction of extruding a ceramic raw material" indicates the region inside the line that is drawn by connecting the points each halving a line connecting the center of the die body 10 in a cross section of the die body 10 (the center indicated by "O" in the cross section of the die body in Fig. 4) and the outer periphery (in Fig. 4, the half point is indicated by "P").

Although the case where the cross-sectional shape of the die body is a rectangle (square) in Fig. 4, "1/2 of a region ranging from the center of a cross section of the die body to the outer periphery of the cross section, the cross section perpendicular to the direction of extruding a ceramic raw material" is a region that satisfies the above relation regardless of the cross-sectional shape of the die body.

In the die body constituting the die for extrusion molding according to the first embodiment of the present invention, the width of each molding groove corresponding to the thickness of a cell wall of the honeycomb molded body is preferably 0.1 to 0.2 mm.

In the die body constituting the die for extrusion molding according to the first embodiment of the present invention, the width of each molding groove corresponding to the thickness of the outer peripheral wall of the honeycomb molded body is preferably 0.2 to 0.5 mm. Also, the width of the molding groove corresponding to the thickness of the outer peripheral wall of a honeycomb molded body is more preferably larger than the width of the molding groove corresponding to the thickness of each cell wall of the honeycomb molded body.

When the width of the molding groove corresponding to the thickness of each cell wall of the honeycomb molded body is 0.1 to 0.2 mm, and when the width of the molding groove corresponding to the thickness of the outer peripheral wall of the honeycomb molded body is 0.2 to 0.5 mm, the width of the molding groove is typically small, and thus the molding grooves tend to be clogged with the ceramic raw material. However, if the die including curved parts and a part that satisfies the inequality 2.0 ≤ a/b is used, the ceramic raw material tends to flow more smoothly from the raw material supply holes to the molding grooves, so that the honeycomb molded body can be prevented from being cracked or deformed.

In the die body constituting the die for extrusion molding according to the first embodiment of the present invention, the width of each raw material supply hole is not particularly limited, but is preferably is 1.0 to 1.5 mm.

When the cross-sectional shape of the raw material supply hole is a circle, the width of each raw material supply hole means the inner diameter of the raw material supply hole.

Next, one example of the method of producing a die body constituting the die for extrusion molding according to the first embodiment of the present invention is described.

First, a base constituting the die body is cut to have raw material supply holes and molding grooves communicating with the raw material supply holes.

The material of the base constituting the die body is not particularly limited, but is preferably superhard alloy, tool steel, or tool steel for hot dies.

Examples of the method of forming raw material supply holes include, but not particularly limited to, the method of forming raw material holes having a predetermined inner diameter by cutting the base through machining with a tool such as an end mill or drill.

Examples of the method of forming molding grooves include, but not particularly limited to, the method of forming raw material supply holes, and then forming molding grooves having a predetermined slit width by cutting the base through machining with a tool such as a dicing machine using sharpening stones including diamond, from the side opposite to the part where the raw material supply holes are formed.

A predetermined number of the molding grooves may form a desired shape (e.g. lattice) at predetermined intervals, depending on the shape of the target honeycomb molded body (honeycomb structured body).

The raw material supply holes may be typically formed from the face of the base on the side opposite to the face in which the molding grooves are formed, so as to correspond to the respective intersections of the molding grooves.

Next, connecting parts are formed between the raw material supply holes and the molding grooves.

Examples of the method of forming the connecting parts include, but not particularly limited to, the method of forming the connecting parts by flow polishing, electron discharge machining, electrochemical machining, or machining.

Among these, flow polishing is preferred in formation of the connecting parts.

Flow polishing facilitates production of a die for extrusion molding which includes curved parts and a part that satisfies the inequality 2.0 ≤ a/b.

If the connecting parts are formed by flow polishing, the connecting parts having the above structure can be specifically formed by repeatedly introduction of a polishing agent including, for example, a polishing agent containing silicon carbide (SiC) abrasive particles, which is a material with higher rigidity than the material of the base as in the case of the ceramic raw material, and then extruding the polishing agent through the molding grooves. Also, the polishing agent may be introduced through the molding grooves.

When the connecting parts are formed by flow polishing, the ratio of the length a to the length b in the connecting parts (hereinafter, also referred to as the a/b ratio) can be adjusted by changing the flow polishing conditions (e.g. grain size, polishing time, polishing pressure, polishing temperature). For example, the a/b ratio can be increased by lengthening the polishing time.

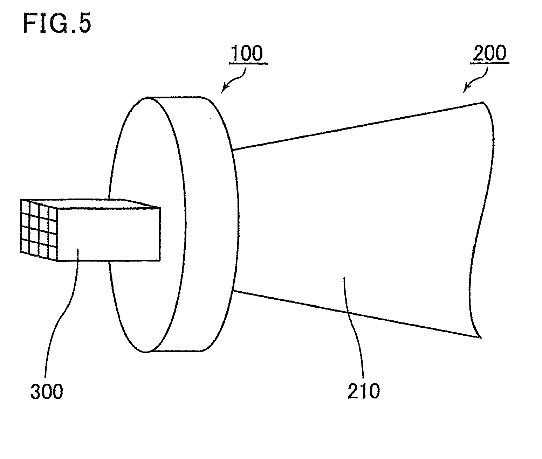

Fig. 5 is a perspective view schematically illustrating production of a honeycomb molded body with an extruder including the die for extrusion molding according to the first embodiment of the present invention.

In an extruder 200 illustrated in Fig. 5, a die 100 for extrusion molding is provided to the tip of a casing 210, and a molded body 300 is continuously extruded out through the die 100. A screw (not illustrated) is provided inside the casing 210, and the screw mixes the ceramic raw material and forces the ceramic raw material into the die 100.

As a result, the molded body 300 is provided which includes a plurality of cells that are separated by cell walls and arranged in parallel with one another in the longitudinal direction, and the outer peripheral wall provided around the cells. Then, the continuously extended molded body 300 is cut into a predetermined length, so that a honeycomb molded body is produced.

When extrusion molding is performed using the extruder 200 illustrated in Fig. 5, the ceramic raw material is charged into the casing 210. The ceramic raw material is further kneaded inside the extruder 200, and gradually transferred to the end by screw blades (not illustrated). Then, after the ceramic raw material is extruded out through the molding grooves inside the die 100 for extrusion molding, the ceramic raw material is cut into a predetermined length.

Hereinafter, one example of the method of producing a honeycomb structured body according to the first embodiment of the present invention is described.

### (1) First, a wet mixture (ceramic raw material) containing ceramic powder and a binder is prepared.

In particular, ceramic powder, an organic binder, a liquid plasticizer, a lubricant, and water are mixed, whereby a wet mixture for producing a honeycomb molded body is prepared.

The ceramic powder may be selected depending on the materials of the honeycomb molded body (honeycomb structured body) to be produced.

Examples of the main materials of honeycomb molded bodies include nitride ceramics (e.g. aluminum nitride, silicon nitride, boron nitride, titanium nitride), carbide ceramics (e.g. silicon carbide, zirconium carbide, titanium carbide, tantalum carbide, tungsten carbide), and oxide ceramics (e.g. alumina, zirconia, cordierite, mullite, silica, aluminum titanate).

Among these main materials of the honeycomb molded body, non-oxide ceramic is preferred, and silicon carbide is particularly preferred, from the viewpoints of excellent properties of heat resistance, mechanical strength, and thermal conductivity.

The expression "formed from a material mainly containing silicon carbide" means that the ceramic powder contains at least 60% by weight of silicon carbide. If the main material is silicon carbide, silicon carbide includes not only silicon carbide but also silicon-bonded silicon carbide. The same applies to the main materials other than silicon carbide.

### (2) Next, a honeycomb molded body having a predetermined shape is produced by extrusion molding the wet mixture (ceramic raw material).

In this case, the extrusion molding is performed with the die for extrusion molding according to the first embodiment of the present invention.

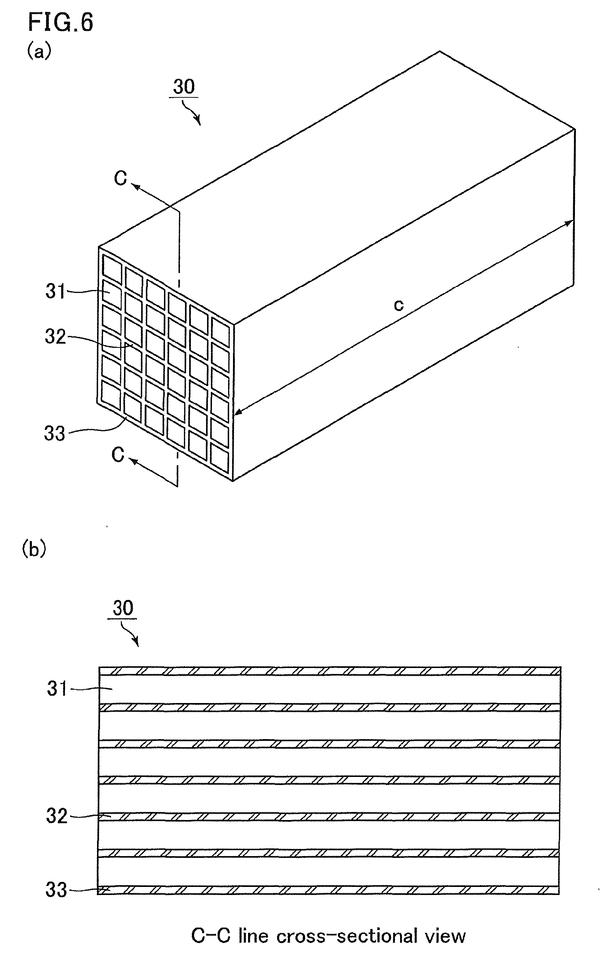

Fig. 6(a) is a perspective view schematically illustrating an example of the honeycomb molded body according to the first embodiment of the present invention; and Fig. 6(b) is a C-C line cross-sectional view of the honeycomb molded body illustrated in Fig. 6(a).

The honeycomb molded body 30 illustrated in Fig. 6(a) and Fig. 6(b) includes a plurality of cells 31, the cells 31 being separated by cell walls 32 and arranged in parallel with one another in a longitudinal direction (the direction indicated by the arrow c in Fig. 6(a)), and an outer peripheral wall 33 provided around the cells 31.

### (3) The honeycomb molded body is then dried with a drying apparatus, such as a microwave drying apparatus, a hot-air drying apparatus, a dielectric drying apparatus, a reduced-pressure drying apparatus, a vacuum drying apparatus, and a freeze drying apparatus. Thereby, a dried body of a honeycomb molded body is produced.

The dried body of the honeycomb molded body is then degreased (for example at 200 to 500°C) and fired (for example at 1400 to 2300°C).

Through the above steps, a honeycomb fired body is produced which includes a plurality of cells that are separated by cell walls and arranged in parallel with one another in the longitudinal direction, and the outer peripheral wall provided around the cells.

The conditions of the degreasing and firing of the dried body of the honeycomb molded body can be the conditions conventionally used in production of a honeycomb fired body.

The method of producing a honeycomb structured body according to the first embodiment of the present invention also enables production of a honeycomb fired body in which either one end of each cell is sealed. In this case, after the drying in the above step (3), the dried cells are sealed by placing a predetermined amount of a plug material paste at the predetermined end portions of the cells of the dried body of the honeycomb molded body. The degreasing and firing performed thereafter enable production of a honeycomb fired body in which either one end of the cells is sealed.

Here, the plug material paste can be the above wet mixture.

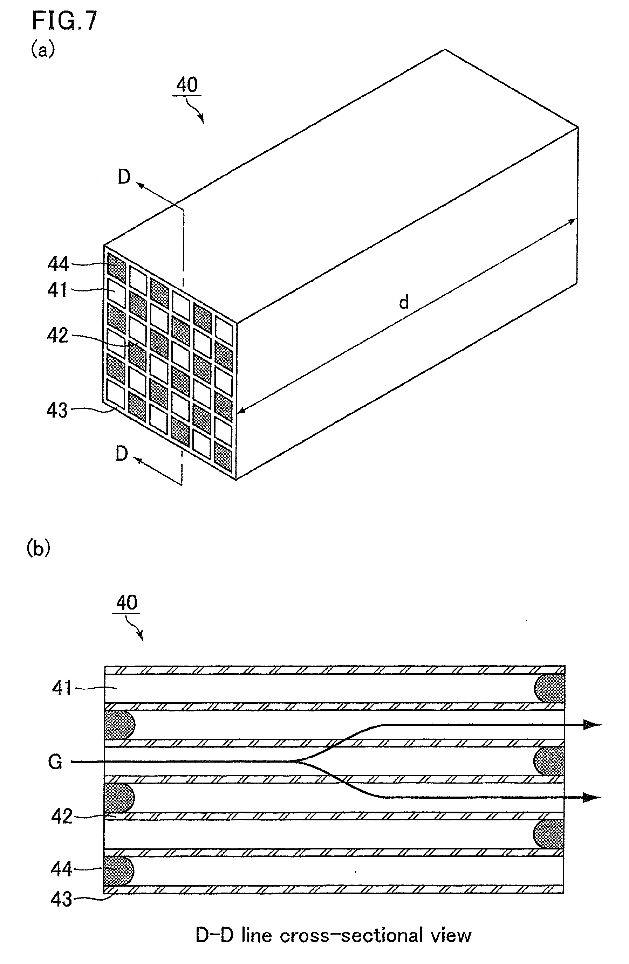

Fig. 7(a) is a perspective view schematically illustrating an example of the honeycomb fired body according to the first embodiment of the present invention; and Fig. 7(b) is a D-D line cross-sectional view of the honeycomb fired body illustrated in Fig. 7(a).

A honeycomb fired body 40 illustrated in Fig. 7(a) and Fig. 7(b) includes a plurality of cells 41 which are separated by cell walls 42 and arranged in parallel with one another in the longitudinal direction (the direction of the arrow d in Fig. 7(a)) and an outer peripheral wall 43 around the cells 41. Either one end of the cells 41 is sealed with a plug material 44.

Hence, exhaust gases G (in Fig. 7(b), exhaust gases are indicated by G, and the flow of the exhaust gases is indicated by arrows) having flowed into one of the cells 41 with an end on one side open surely pass through the cell walls 42 separating the cells 41 before flowing out of other cells 41 with the ends on the other side open. The cell walls 42 therefore function as filters for capturing PMs in exhaust gases when the exhaust gases G pass through the cell walls 42.

Thus, the honeycomb structured body including the honeycomb fired body in which either one end of each cell is sealed is suitable as a ceramic filter. The honeycomb structured body in which neither end of each cell is sealed is suitable as a catalyst carrier.

### (4) Next, a ceramic block of at least one honeycomb fired body is produced.

Here, the method of producing a ceramic block of honeycomb fired bodies bonded to one another with an adhesive layer therebetween is described as an example.

First, an adhesive paste layer is formed by applying an adhesive paste for forming an adhesive layer to predetermined side faces of the honeycomb fired bodies. On the adhesive paste layer, other honeycomb fired bodies are sequentially laminated, so that an aggregate of honeycomb fired bodies is produced.

The adhesive paste layer is dried and solidified into an adhesive layer by heating the aggregate of honeycomb fired bodies, whereby a ceramic block is produced.

Here, the adhesive paste used may contain, for example, an inorganic binder, an organic binder, and inorganic particles. The above adhesive paste may contain inorganic fibers and/or a whisker.

### (5) Thereafter, the ceramic block is cut.

In particular, the outer periphery of the ceramic block is cut with a tool such as a diamond cutter, so that the outer periphery of the ceramic block is processed into a round pillar shape.

### (6) To the periphery of the round-pillar shaped ceramic block, an outer periphery coating past is applied, and dried to be solidified. Thereby, the outer periphery coating layer is formed.

Here, the outer periphery coating paste can be the above adhesive layer. The outer periphery coating paste may be a past having a different composition from the above adhesive paste.

Also, the outer periphery coating layer is not necessary, and may be provided depending on the need.

Through the above steps, a honeycomb structured body can be produced.

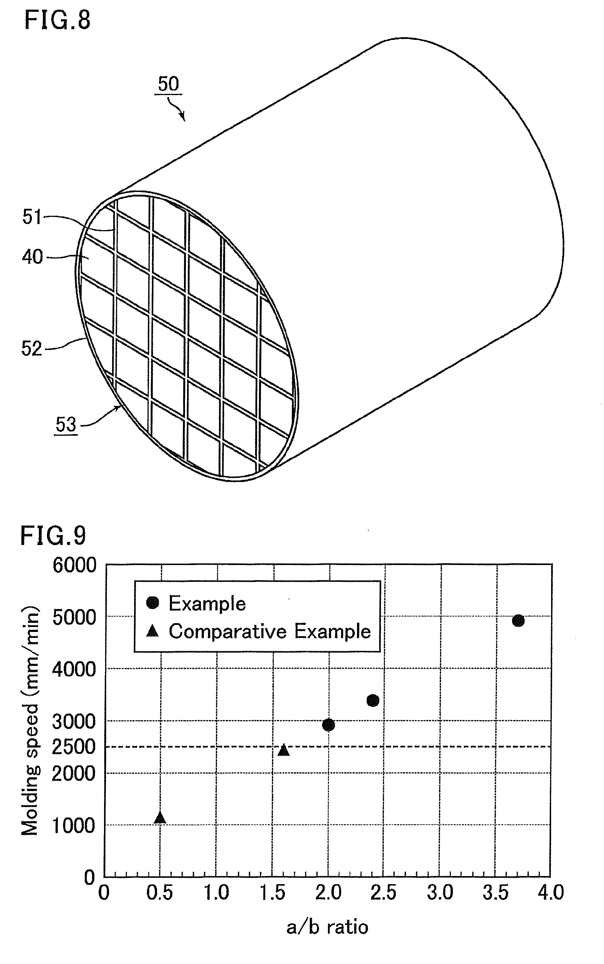

Fig. 8 is a perspective view schematically illustrating an example of the honeycomb structured body according to the first embodiment of the present invention.

The honeycomb structured body 50 illustrated in Fig. 8 includes a ceramic block 53 formed by bonding the honeycomb fired bodies 40 together by interposing an adhesive layer 51 therebetween, and an outer periphery coating layer 52 formed on the outer periphery of the ceramic block 53. The outer periphery coating layer may be formed depending on the need.

Such a honeycomb structured body formed by bonding honeycomb fired bodies together is also referred to as an aggregated honeycomb structure.

Hereinafter, the method of producing a honeycomb structured body according to the first embodiment of the present invention and the effect of the die for extrusion molding are described.
(1) In the die for extrusion molding in the present embodiment, a curved part is provided at each position where a connecting part and a molding groove connect to one another in a cross section parallel to the direction of extruding the ceramic raw material. The curved parts allow smooth flow of the ceramic raw material from the raw material supply holes to the molding grooves. Therefore, even if the molding speed is high, the molding grooves, for example, are not likely to be clogged with the ceramic raw material.
(2) Furthermore, the die for extrusion molding of the present embodiment includes a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material. The curved parts allow smooth flow of the ceramic raw material from the raw material supply holes to the molding grooves. Therefore, even if the molding speed is high, the molding grooves, for example, are even less likely to be clogged with the ceramic raw material.
(3) The method of producing a honeycomb structured body according to the present embodiment includes producing a honeycomb molded body by extrusion molding a ceramic raw material with the die for extrusion molding according to the present embodiment. Hence, even if the molding speed is high, the honeycomb molded body can be prevented from being cracked or deformed because of clogging of the parts such as the molding grooves with the ceramic raw material. As a result, both the moldability and the productivity of the honeycomb molded body can be higher.

### (Examples)

Hereinafter, examples specifically showing the first embodiment of the present invention are described. The scope of the present invention is not limited to these examples.

### (Example 1)

First, in each side face of a superhard alloy base, raw material supply holes and molding grooves were formed.

The width of each molding groove corresponding to the thickness of each cell wall of a honeycomb molded body was set to 0.18 mm, the width of each molding groove corresponding to the thickness of the outer peripheral wall of the honeycomb molded body was set to 0.30 mm, and the depth of each molding groove was set to 2 mm.

The inner diameter of the raw material supply hole was set to 1.2 mm, and the depth of the raw material supply hole was set to 10 mm.

Next, connecting parts each including a curved part provided at a position where the connecting part connects to the corresponding molding groove, and having an a/b ratio of a/b = 2.0 were formed by flow polishing. A die for extrusion molding was produced which includes the die body produced thereby and an outer frame for fixing the die body at the tip of the extruder.

The conditions of the flow polishing were as follows: material of sharpening particles: SiC, diameter of sharpening particles: 25 to 35 µm, and polishing time: 40 hours. The flow polishing was performed by repeating the operation of introducing the polishing agent into the raw material supply holes evenly, and extruding the agent through the molding grooves.

Then, the die for extrusion molding was mounted to the extruder. A wet mixture (ceramic raw material) mainly containing silicon carbide was put into the extruder, and the mixture was extrusion molded under a pressure of 70 kgf/cm² (6.86 MPa), so that a molded body was continuously produced. Then, a honeycomb molded body was produced by cutting the molded body.

Here, the length of the molded body extruded out of the extruder (i.e. the distance traveled in the direction of extrusion) per minute was measured, and the measured value was taken as the molding speed. The molding speed in Example 1 was 2912 mm/min.

The obtained honeycomb molded body was visually observed, and no cracking or deformation was observed in the honeycomb molded body.

The wet mixture mainly containing silicon carbide was a wet mixture obtained by mixing coarse powder of silicon carbide having an average particle size of 22 µm (54.6% by weight) and fine powder of silicon carbide having an average particle size of 0.5 µm (23.4% by weight), adding an organic binder (methyl cellulose) (4.3% by weight), a lubricant (UNILUBE, NOF Corp., 2.6% by weight), glycerol (1.2% by weight), and water (13.9% by weight), and kneading the obtained mixture.

Subsequently, the honeycomb molded body was dried with a microwave drying apparatus, whereby a dried body of the honeycomb molded body was produced. Then, sealing of cells was performed by filling the predetermined cells of the dried body of the honeycomb molded body with a plug material paste. The above wet mixture was used as the plug material paste. After the sealing of cells, the dried body of the honeycomb molded body of which the cells were filled with the plug material paste was dried again with a drying apparatus.

Then, the degreasing treatment of degreasing the dried body of the honeycomb molded body with sealed cells at 400°C was performed, and the firing treatment was performed at an ordinary argon pressure and 2200°C for three hours.

Thereby, a honeycomb fired body was produced.

The honeycomb fired body produced in Example 1 had a porosity of 42%, an average pore diameter of 9 µm, a size of 34.3 mm × 34.3 mm × 200 mm, the number of cells (cell density) of 24 × 24 pcs/unit, a cell wall thickness of 0.18 mm, and an outer peripheral wall thickness of 0.30 mm.

### (Examples 2 and 3 and Comparative Examples 1 and 2)

In production of a die for extrusion molding, die bodies with different a/b ratios were produced by changing the conditions of flow polishing (polishing time).

In particular, the polishing times in Examples 2 and 3 and Comparative Examples 1 and 2 were respectively set to 48 hours, 70 hours, 0 hours, and 20 hours. The other conditions were the same as those in Example 1.

The a/b ratios in Examples 2 and 3 and Comparative Example 1 and 2 were respectively a/b = 2.4, 3.7, 0.5, and 1.6.

Next, honeycomb molded bodies were produced in the same manner as in Example 1 except that the dies for extrusion molding included the respective corresponding die bodies. Also, the molding speed was measured in the same manner as in Example 1.

The molding speeds in Examples 2 and 3 and Comparative Examples 1 and 2 were 3382 mm/min, 4912 mm/min, 1146 mm/min, and 2441 mm/min, respectively.

The obtained honeycomb molded body was visually observed, and no cracking or deformation was observed in the honeycomb molded bodies.

Then, honeycomb fired bodies were produced in the same manner as in Example 1.

The honeycomb fired body produced in each of Examples 2 and 3 and Comparative Examples 1 and 2 had a porosity of 42%, an average pore diameter of 9 µm, a size of 34.3 mm × 34.3 mm × 200 mm, the number of cells (cell density) of 24 × 24 pcs/unit, a cell wall thickness of 0.18 mm, and an outer peripheral wall thickness of 0.30 mm, which are the same as those of the honeycomb fired body produced in Example 1.

The a/b ratio of the die body and the molding speed in the die for extrusion molding of each of Examples 1 to 3 and Comparative Examples 1 and 2 are summarized in Table 1.

Also, the relationship between the a/b ratio and the molding speed in Examples 1 to 3 and Comparative Examples 1 and 2 are shown in the graph in Fig. 9.

**[Table 1]**

| | a/b ratio | Molding speed (mm/min) |
|---|---|---|
| Example 1 | 2.0 | 2912 |
| Example 2 | 2.4 | 3382 |
| Example 3 | 3.7 | 4912 |
| Comparative Example 1 | 0.5 | 1146 |
| Comparative Example 2 | 1.6 | 2441 |

In each of Examples 1 to 3, the molding speed was as high as at least 2500 mm/min. The results show that a honeycomb molded body can be produced without cracking or deformation even when the molding speed is high.

A molding speed of at least 2500 mm/min is considered to be at a sufficient level as the production efficiency of honeycomb structured bodies.

In contrast, the honeycomb molded bodies obtained in Comparative Examples 1 and 2 did not have cracking or deformation, but had a low molding speed of lower than 2500 mm/min. Therefore, production of honeycomb structured bodies in Comparative Examples 1 and 2 is not efficient compared to that in Examples 1 to 3.

Also, in the case of increasing the molding speed with the dies for extrusion molding in Comparative Examples 1 and 2, the pressure applied during molding is required to be increased. An increase in the pressure during molding, however, is considered to increase the possibility of cracking or deforming the honeycomb molded body.

In view of the above results, production of a honeycomb molded body with a die for extrusion molding including a part that satisfies the inequality 2.0 ≤ a/b is deemed to enables prevention of cracking or deformation in the honeycomb molded body.

### (Other embodiments)

In the method of producing a honeycomb structured body according to the first embodiment of the present invention, a method of producing a ceramic block in which a plurality of honeycomb fired bodies are bound to one another with an adhesive layer therebetween was described.

However, in the method of producing a honeycomb structured body according to any of the embodiments of the present invention, a ceramic block may be produced from one honeycomb fired body. That is, a honeycomb structured body consisting of one honeycomb fired body may be produced. Such a honeycomb structured body consisting of one honeycomb fired body is also referred to as an integrated honeycomb structured body.

In the case of producing an integrated honeycomb structured body, a honeycomb molded body is produced in the same manner as in the first embodiment of the present invention although the size of the honeycomb molded body is larger than that of the honeycomb molded body described in the first embodiment of the present invention and the outer shapes thereof are different.

That is, a honeycomb molded body may be produced with a die for extrusion molding which has the same structure as the die for extrusion molding according to the first embodiment of the present invention except for having a cross-sectional shape corresponding to the shape of the honeycomb molded body to be obtained.

The other steps are the same as the steps of producing a honeycomb structured body described for the first embodiment of the present invention. However, since the honeycomb structured body consists of one honeycomb fired body, an aggregate of honeycomb fired bodies is not necessarily produced. Also, in production of a pillar-shaped honeycomb molded body, the outer periphery of the ceramic block is not necessarily cut.

In the method of producing a honeycomb structured body according to any of the embodiments of the present invention, a plurality of kinds of honeycomb fired bodies with different cross-sectional shapes may be produced, and then a ceramic block in which the plurality of kinds of honeycomb fired bodies are bound to one another with an adhesive layer therebetween may be produced. This process can eliminate the step of cutting the outer periphery of the ceramic block.

Here, the honeycomb fired bodies with different cross-sectional shapes can be produced by changing the shape of the die for extrusion molding. Also in this case, a honeycomb molded body may be produced with a die for extrusion molding which has the same structure as the die for extrusion molding according to the first embodiment of the present invention except for having a cross-sectional shape corresponding to the shape of the honeycomb molded body to be obtained.

In the case of producing a ceramic block in which a plurality of honeycomb fired bodies are bound with an adhesive layer therebetween in the method of producing a honeycomb structured body according to any of the embodiments of the present invention, the adhesive paste may be applied to the side faces of each honeycomb fired body, or may be, for example, injected between the honeycomb fired bodies in a provisionally fixed state within a frame that has the same shape as the ceramic block (or aggregate of honeycomb fired bodies) to be produced.

The honeycomb structured body produced by the method of producing a honeycomb structured body according to any of the embodiments of the present invention may have a shape other than a round pillar shape, such as a cylindroid shape, a pillar shape with a racetrack end face, and a polygonal shape.

In the die for extrusion molding according to any of the embodiments of the present invention, the area of the part from which a honeycomb molded body is extruded is preferably from 900 to 1600 mm² (30 to 40 mm in diameter).

In the die for extrusion molding according to any of the embodiments of the present invention, each raw material supply hole of the die body may have any shape such as a rectangular, tapered, or trapezoidal cross-sectional shape in the direction parallel to the direction of extruding the ceramic raw material.

Among these, a rectangular cross-sectional shape is preferred from the viewpoint of ease of formation of the raw material supply holes.

Similarly, in the die for extrusion molding according to any of the embodiments of the present invention, each molding groove of the die body may have any shape such as a rectangular or tapered cross-sectional shape in the direction parallel to the direction of extruding the ceramic raw material.

Among these, a rectangular cross-sectional shape is preferred from the viewpoint of ease of formation of the molding grooves. Since the die body constituting the die for extrusion molding according to any of the embodiments of the present invention has a curved part at each position where the connecting part connects to the corresponding molding groove, the curved parts allow smooth flow of the ceramic raw material from the raw material supply holes to the molding grooves even when the molding grooves have a rectangular cross-sectional shape.

If the honeycomb structured body produced by the method of producing a honeycomb structured body according to any of the embodiments of the present invention is used as a filter, the honeycomb fired body/bodies constituting the honeycomb structured body preferably has/have a porosity of 35 to 60%, although not particularly limited.

A porosity of the honeycomb fired body/bodies of lower than 35% tends to cause clogging in the honeycomb fired body/bodies. In contrast, a porosity of the honeycomb fired body/bodies of higher than 60% tends to decrease the strength of the honeycomb fired body/bodies, destroying the honeycomb fired body/bodies.

If the honeycomb structured body produced by the method of producing a honeycomb structured body according to any of the embodiments of the present invention is used as a filter, the honeycomb fired body/bodies constituting the honeycomb structured body preferably has/have an average pore diameter of 5 to 30 µm.

An average pore diameter of the honeycomb fired body/bodies is smaller than 5 µm tends to cause clogging in the honeycomb fired body/bodies. In contrast, an average pore diameter of the honeycomb fired body/bodies of greater than 30 µm tends to allow the particulates to pass through the pores in the honeycomb fired body/bodies, whereby the honeycomb fired body/bodies cannot capture the particulates, and thus the honeycomb structured body cannot function as a filter.

The porosity and the pore diameter can each be measured by a conventionally known method such as a mercury porosimetry method.

In the method of producing a honeycomb structured body according to any of the embodiments of the present invention, the cell density at a cross section of the honeycomb fired body/bodies constituting the honeycomb structured body to be produced is not particularly limited. Still, the cell density is preferably from a lower limit of 31.0 pcs/cm² (200 pcs/inch²) to an upper limit of 93.0 pcs/cm² (600 pcs/inch²), and more preferably from a lower limit of 38.8 pcs/cm² (250 pcs/inch²) to an upper limit of 77.5 pcs/cm² (500 pcs/inch²).

In the method of producing a honeycomb structured body according to any of the embodiments of the present invention, the thickness of each cell wall of the honeycomb fired body/bodies constituting the honeycomb structured body to be produced is not particularly limited. Still, the thickness is preferably 0.1 to 0.4 mm.

A thickness of each cell wall of smaller than 0.1 mm tends to be excessively thin, failing to maintain the strength of the honeycomb fired body/bodies. In contrast, a thickness of each cell wall of greater than 0.4 mm tends to increase the pressure loss of the honeycomb structured body.

In the method of producing a honeycomb structured body according to any of the embodiments of the present invention, the thickness of the outer peripheral wall of the honeycomb fired body/bodies constituting the honeycomb structured body to be produced may be equal to or greater than the thickness of each cell wall, but is preferably greater than the thickness of each cell wall from the viewpoint of the strength of the honeycomb fired body/bodies.

If the thickness of the outer peripheral wall of the honeycomb fired body/bodies is greater than the thickness of each cell wall, the thickness of the outer peripheral wall is preferably 1.3 to 3.0 times the thickness of each cell wall.

In the method of producing a honeycomb structured body according to any of the embodiments of the present invention, the cross-sectional shape of each cell of the honeycomb fired body/bodies constituting the honeycomb structured body to be produced in the direction perpendicular to the longitudinal direction of the honeycomb fired body/bodies is not particularly limited. The cross-sectional shape may be any shape such as a circular shape, an elliptical shape, a rectangular shape, a pentagonal shape, a hexagonal shape, a trapozoidal shape, and an octagonal shape. Also, cells with those cross-sectional shapes may be used in combination.

Although the particle size of the ceramic powder used in the method of producing a honeycomb structured body according to any of the embodiments of the present invention is not particularly limited, ceramic powder that is less susceptible to shrinkage in the succeeding firing process is preferred. For example, mixed powder of 100 parts by weight of ceramic powder having an average particle size from 3 to 70 µm and 5 to 65 parts by weight of ceramic powder having an average particle size from 0.1 to 1.0 µm is preferred.

The ceramic powder may have been oxidized.

Examples of the organic binder contained in the wet mixture used in the method of producing a honeycomb structured body according to any of the embodiments of the present invention include, but not particularly limited to, methyl cellulose, carboxymethyl cellulose, hydroxyethyl cellulose, and polyethylene glycol. In particular, methyl cellulose is preferred. The preferred blending amount of the organic binder is usually 1 to 10 parts by weight for each 100 parts by weight of the ceramic powder.

Examples of the plasticizer contained in the wet mixture include, but not particularly limited to, glycerol.

Examples of the lubricant contained in the wet mixture include, but not particularly limited to, polyoxyalkylene-based compounds such as polyoxyethylene alkyl ether and polyoxypropylene alkyl ether.

Specific examples thereof include polyoxyethylene monobutyl ether and polyoxypropylene monobutyl ether.

The plasticizer and the lubricant may not be contained in the wet mixture depending on the case.

In preparation of the wet mixture, a dispersion medium may be used. Examples of the dispersion medium include organic solvents such as water and benzene, and alcohols such as methanol.

The wet mixture may contain a molding aid.

Examples of the molding aid include, but not particularly limited to, ethylene glycol, dextrin, fatty acid, fatty acid soap, and polyalcohol.

Furthermore, the wet mixture may contain a pore-forming agent such as balloons that are fine hollow spheres including oxide-based ceramics, spherical acrylic particles, and graphite, if needed.

Examples of the balloons include, but not particularly limited to, alumina balloons, glass micro balloons, shirasu balloons, fly ash balloons (FA balloons), and mullite balloons. In particular, alumina balloons are preferred.

Examples of the inorganic binder contained in the adhesive paste and the outer periphery coating material paste include silica sol and alumina sol. These may be used alone or in combination. Among these inorganic binders, silica sol is preferred.

Examples of the organic binder contained in the adhesive paste and the outer periphery coating material paste include polyvinyl alcohol, methyl cellulose, ethyl cellulose, and carboxymethyl cellulose. These may be used alone or in combination. Among these organic binders, carboxymethyl cellulose is preferred.

Examples of the inorganic particles contained in the adhesive paste and the outer periphery coating material paste include carbide particles and nitride particles. Specific examples thereof include silicon carbide particles, silicon nitride particles, and boron nitride particles. These may be used alone or in combination. Among these inorganic particles, silicon carbide particles having excellent thermal conductivity are preferred.

Examples of the inorganic fibers and/or the inorganic whiskers contained in the adhesive paste and the outer periphery coating material paste include inorganic fibers and/or inorganic whiskers containing silica-alumina, mullite, alumina, or silica. These may be used alone or in combination. Among the inorganic fibers, alumina fibers are preferred. The inorganic fibers may be bio-soluble inorganic fibers.

Furthermore, the adhesive paste and the outer periphery coating material paste may contain a pore-forming agent such as balloons that are fine hollow spheres including oxide-based ceramics, spherical acrylic particles, and graphite, if needed. Examples of the balloons include, but not particularly limited to, alumina balloons, glass micro balloons, shirasu balloons, fly ash balloons (FA balloons), and mullite balloons. In particular, alumina balloons are preferred.

In the method of producing a honeycomb structured body according to any of the embodiments of the present invention, a catalyst may be supported on the cell walls of the honeycomb fired body/bodies constituting the honeycomb structured body to be produced. The catalyst to be supported is preferably a noble metal such as platinum, palladium, and rhodium, for example. The catalyst can also be, for example, an alkali metal such as potassium and sodium, an alkaline earth metal such as barium, and zeolite. These catalysts may be used alone or in combination.

The method of producing a honeycomb structured body according to the present invention essentially features extrusion-molding a ceramic raw material with a die for extrusion molding which includes connecting parts each including a curved part provided at a position where the connecting part connects to the corresponding molding groove, and a straight part connected to the curved part and extending toward the corresponding raw material supply hole, and a part that satisfies the inequality 2.0 ≤ a/b. The die for extrusion molding according to the present invention also essentially features connecting parts each including a curved part provided at a position where the connecting part connects to the corresponding molding groove, and a straight part connected to the curved part and extending toward the corresponding raw material supply hole, and a part that satisfies the inequality 2.0 ≤ a/b.

Combining the essential features with the various structures described in detail (e.g. the shape of the die body constituting the die for extrusion molding, the shape of the honeycomb molded body to be produced, the method of producing a honeycomb structured body) in the first embodiment and the other embodiments of the present invention achieves the desired effects.

### REFERENCE SIGNS LIST

- 10: Die body
- 11: Raw material supply hole
- 12: Molding groove
- 13: Connecting part
- 13a: Curved part
- 13b: Straight part
- 30: Honeycomb molded body
- 31, 41: Cell
- 32, 42: Cell wall
- 33, 43: Outer peripheral wall
- 40: Honeycomb fired body
- 50: Honeycomb structured body
- 53: Ceramic block
- 100: Die for extrusion molding
- A: Raw material inlet side face of die body
- B: Molded body extrusion side face of die body
- a: Length of connecting part in direction parallel to direction of extruding ceramic raw material
- x: Width of raw material supply hole at position where hole connects to connecting part in direction perpendicular to direction of extruding ceramic raw material
- y: Width of raw material supply hole corresponding to thickness of cell wall or outer peripheral wall of honeycomb molded body in direction perpendicular to direction of extruding ceramic raw material

## Claims

1. A method of producing a honeycomb structured body, comprising the steps of:
producing at least one honeycomb molded body that comprises a plurality of cells, the cells being separated by cell walls and arranged in parallel with one another in a longitudinal direction, and an outer peripheral wall provided around the cells, by extrusion molding a ceramic raw material through a die for extrusion molding;
producing at least one honeycomb fired body by firing the at least one honeycomb molded body; and
producing a ceramic block of the at least one honeycomb fired body,
the die comprising a die body having a raw material inlet side face and a molded body extrusion side face,
the raw material inlet side face including raw material supply holes for supplying the ceramic raw material,
the molded body extrusion side face including molding grooves for molding the ceramic raw material into the shape of the honeycomb molded body,
the raw material supply holes and the molding grooves communicating with one another through connecting parts formed between the raw material supply holes and the molding grooves,
the connecting parts each including, in a cross section parallel to the direction of extruding the ceramic raw material, a curved part provided at a position where the connecting part connects to the corresponding molding groove, and a straight part connected to the curved part and extending toward the corresponding raw material supply hole,
the die including a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

2. The method according to claim 1,
wherein the part that satisfies the inequality 2.0 ≤ a/b in the die is at least 50% of the die body.

3. The method according to claim 1 or 2,
wherein the part that satisfies the inequality 2.0 ≤ a/b in the die includes 1/2 of a region ranging from the center of a cross section of the die body to the outer periphery of the cross section, the cross section perpendicular to the direction of extruding a ceramic raw material.

4. The method according to any one of claims 1 to 3,
wherein the part that satisfies the inequality 2.0 ≤ a/b in the die satisfies the inequality 2.0 ≤ a/b ≤ 4.0.

5. The method according to any one of claims 1 to 4,
wherein the width of each molding groove in the die corresponding to the thickness of a cell wall of the honeycomb molded body is 0.1 to 0.2 mm.

6. The method according to any one of claims 1 to 5,
wherein the width of each molding groove in the die corresponding to the thickness of the outer peripheral wall of the honeycomb molded body is 0.2 to 0.5 mm.

7. The method according to any one of claims 1 to 6,
wherein the curved parts of the die are formed by flow polishing.

8. The method according to any one of claims 1 to 7,
wherein the honeycomb molded body is formed from a material mainly containing silicon carbide.

9. The method according to any one of claims 1 to 8,
wherein the step of producing a ceramic block includes binding a plurality of the honeycomb fired bodies together with an adhesive paste therebetween.

10. A die for extrusion molding, used for producing at least one honeycomb molded body that comprises a plurality of cells, the cells being separated by cell walls and arranged in parallel with one another in a longitudinal direction, and an outer peripheral wall provided around the cells, by extrusion molding a ceramic raw material through a die for extrusion molding,
the die comprising a die body having a raw material inlet side face and a molded body extrusion side face,
the raw material inlet side face including raw material supply holes for supplying the ceramic raw material,
the molded body extrusion side face including molding grooves for molding the ceramic raw material into the shape of the honeycomb molded body,
the raw material supply holes and the molding grooves communicating with one another through connecting parts formed between the raw material supply holes and the molding grooves,
the connecting parts each including, in a cross section parallel to the direction of extruding the ceramic raw material, a curved part provided at a position where the connecting part connects to the corresponding molding groove, and a straight part connected to the curved part and extending toward the corresponding raw material supply hole,
the die including a part that satisfies the inequality 2.0 ≤ a/b, wherein a represents the length of each connecting part in a direction parallel to the direction of extruding the ceramic raw material and b = (x-y)/2, wherein x represents the width of each raw material supply hole at a position where the hole connects to the corresponding connecting part in a direction perpendicular to the direction of extruding the ceramic raw material, and y represents the width of each molding groove, the width corresponding to the thickness of a cell wall or an outer peripheral wall of the honeycomb molded body in a direction perpendicular to the direction for extruding the ceramic raw material.

11. The die according to claim 10,
wherein the part that satisfies the inequality 2.0 ≤ a/b includes at least 50% of the region of the die body.

12. The die according to claim 10 or 11,
wherein the part that satisfies the inequality 2.0 ≤ a/b includes 1/2 of a region ranging from the center of a cross section of the die body to the outer periphery of the cross section, the cross section perpendicular to the direction of extruding a ceramic raw material.

13. The die according to any one of claims 10 to 12,
wherein the part that satisfies the inequality 2.0 ≤ a/b satisfies the inequality 2.0 ≤ a/b ≤ 4.0.

14. The die according to any one of claims 10 to 13,
wherein the width of each molding groove corresponding to the thickness of a cell wall of the honeycomb molded body is 0.1 to 0.2 mm.

15. The die according to any one of claims 10 to 14,
wherein the width of each molding groove corresponding to the thickness of the outer peripheral wall of the honeycomb molded body is 0.2 to 0.5 mm.

16. The die according to any one of claims 10 to 15,
wherein the curved parts are formed by flow polishing.

17. The die according to any one of claims 10 to 16,
wherein the honeycomb molded body is formed from a material mainly containing silicon carbide.
